# EUROPEAN PATENT SPECIFICATION

(11) **EP 3 860 810 B1**
(45) Date of publication and mention of the grant of the patent: **05.06.2024**
(21) Application number: 19798127.7
(22) Date of filing: 04.10.2019
(51) Int. Cl.: B25J 9/00, B25J 9/10

(54) **EXOSKELETON FOR THE ASSISTANCE OF POLYARTICULAR JOINTS**
EXOSKELETT ZUR UNTERSTÜTZUNG VON POLYARTIKULÄREN GELENKEN
EXOSQUELETTE POUR L'ASSISTANCE D'ARTICULATIONS POLYARTICULAIRES

(30) Priority: 05.10.2018 IT 201800009208
(43) Date of publication of application: 11.08.2021
(73) Proprietor: Scuola Superiore di Studi Universitari e di Perfezionamento Sant'Anna, 56127 Pisa (IT)
(72) Inventor: BALDONI, Andrea, 56025 Pontedera (PI) (IT); VITIELLO, Nicola, 56025 Pontedera (PI) (IT); CREA, Simona, 55100 Lucca (IT)
(74) Representative: ABM Agenzia Brevetti & Marchi
(86) International application number: PCT/IB2019/058483
(87) International publication number: WO 2020/070713

(56) References cited:
- WO-A1-2017/216663
- WO-A2-2009/016478
- CN-B- 106 236 505
- JP-A- 2004 358 196
- JP-A- 2013 132 396
- US-A- 6 042 555

## Description

### Field of the invention

The present invention relates to the field of exoskeletons for assistance to the movement of the humane joints.

In particular, the invention relates to an exoskeletal kinematic chain which is adapted to assist the movement of a polyarticular bone chain.

### Description of the prior art

In the field of wearable robotics, the need is increasingly felt to find a simple and efficient architecture to create exoskeletons for the assistance of polyarticular joints, such as for example the set of phalanges that constitutes the finger of the hand or the vertebral column.

To date, although there are numerous exoskeletons that deal with the issue of mobilization, the technical problem that is still very much felt regards the size and weight of these devices, which prevent a truly natural experience of movement for the user.

Furthermore, the exoskeletons for the assistance to polyarticular joints appear to be very complex from the kinematic point of view, because they must have a rotation effect on anatomical multiaxial joints through a kinematics that is not aligned with the joint, but rather arranged above or laterally. This means that the movement of the finger or of the vertebral column must be guaranteed by respecting any passive self-alignment movements of the joints.

In this scenario, both to reduce the weight of the actuators and to provide a more natural use experience, the use of under-actuated robotic devices is increasingly essential.

An example of a under-actuation is shown in US5447403, in which a mesh structure is proposed for a prosthesis implemented under the hand. The essential concept is the use of pairs of cables that, properly directed by pulleys, allow to perform both the bending and extension movement of the prosthetic hand, in a similar way to what the articular tendons do in a human hand.

However, the solution proposed in D1 is strictly applicable only to orthotic robots and does not show in any way how this solution can be translated also to exoskeletal devices, in which anatomical and robotic joints cannot obviously coincide. A device according to the prior art is disclosed in document CN 106 236 505 B.

### Summary of the invention

It is therefore a feature of the present invention to provide an exoskeletal kinematic chain which is adapted to assist the movement of a polyarticular bone chain.

It is also a feature of the present invention to provide such an exoskeletal kinematic chain which allows the bone chain to move smoothly and naturally in both directions of rotation.

It is still a feature of the present invention to provide such an exoskeletal kinematic chain which is less heavy and bulky with respect to prior art devices.

These and other objects are achieved by an exoskeletal kinematic chain according to claims from 1 to 5.

According to another aspect of the invention, a back exoskeleton is claimed that uses the exoskeletal kinematic chain of claim 1.

According to a further aspect of the invention, a hand exoskeleton is claimed that uses the exoskeletal kinematic chain of claim 1.

### Brief description of the drawings

Further characteristic and/or advantages of the present invention are more bright with the following description of an exemplary embodiment thereof, exemplifying but not limitative, with reference to the attached drawings in which:
- Fig. 1 shows a first exemplary embodiment of the kinematical chain according to the present invention in the straight configuration;
- Fig. 1A shows the exemplary embodiment of Fig. 1 in the curved configuration;
- Fig. 2 shows a second exemplary embodiment of the kinematical chain according to the present invention in the straight configuration;
- Fig. 2A shows an exemplary embodiment of Fig. 2 in the curved configuration;
- Fig. 3 shows a third exemplary embodiment of the kinematical chain according to the present invention in the straight configuration;
- Fig. 3A shows an exemplary embodiment of Fig. 3 in the curved configuration;
- Fig. 4 shows a fourth exemplary embodiment of the kinematical chain according to the present invention in the straight configuration;
- Fig. 4A shows an exemplary embodiment of Fig. 4 in the curved configuration;
- Fig. 5 shows an implementation of the kinematical chain of Fig. 1 and 1A to an exoskeleton for the assistance of the vertebral column;
- Fig. 6 shows an implementation of the kinematical chain of Fig. 1 and 1A to an exoskeleton for assistance of a finger of the hand.

### Description of a preferred exemplary embodiment

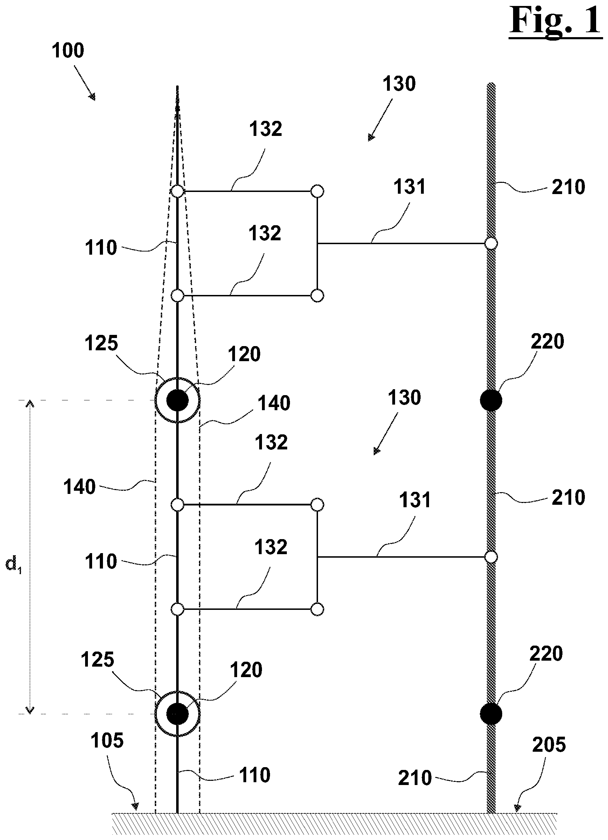

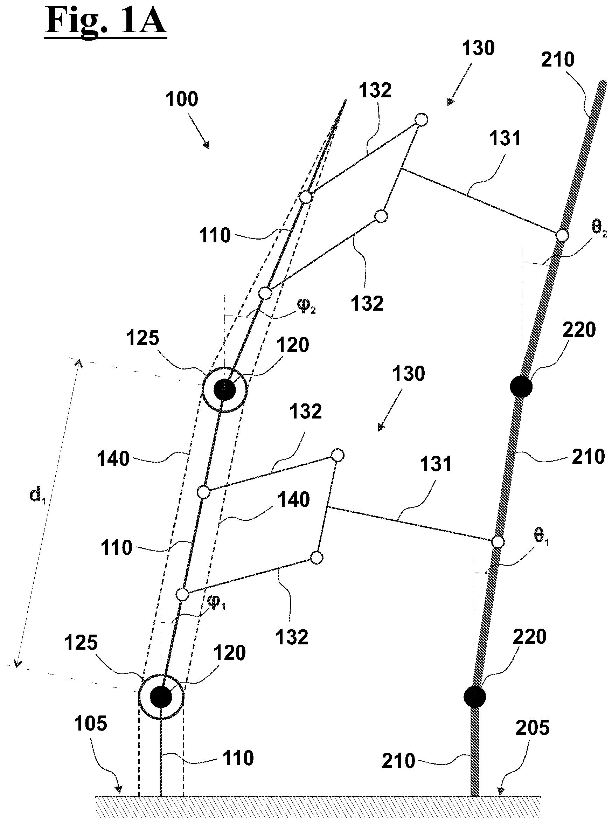

Figs. 1 and 1A show a first exemplary embodiment of the exoskeletal kinematic chain 100 arranged to assist the movement of a polyarticular bone chain 200, respectively in a straight configuration and in a curved configuration.

In particular, the polyarticular bone chain 200 can be diagrammatically divided into an anatomical engagement portion 205, a plurality of bone links 210 and a plurality of anatomical rotational joints 220. For example, the polyarticular bone chain 200 can be the vertebral column or a finger of the hand. Advantageously, in all the exemplary embodiments diagrammatically shown in Figs. 1 to 4A, only 3 bone links 210 are shown, but the principle remains unchanged in the case of a larger number of bone links 210.

The exoskeletal kinematic chain 100 comprises a frame 105 integrally connected to the anatomical engagement portion 205, a number *i* of exoskeletal links 110 equal to the number of the bone link 210, and a number ***j*** of exoskeletal rotational joints 120 equal to the number of the anatomical rotational joints 220. The first exoskeletal link 110 is also constrained to the frame 105.

In particular, the exoskeletal rotational joints 120 are located at a predetermined distances ***dⱼ*.** In the case of Fig. 1, the two exoskeletal rotational joints 120 are located at a distance ***d*₁.** Such distance remains unchanged with the rotation of the various links 110 and 210.

At each exoskeletal rotational joint 120 there is a pulley 125 arranged to rotate about a corresponding rotation axis ***xⱼ*.** A substantially inextensible cable 140 is integrally constrained to the exoskeletal link at the end of the kinematics exoskeleton 100 opposite to the frame 105 and is in contact with each pulley 125.

Furthermore, each exoskeletal link 110 is connected to a corresponding bone link 210 by a kinematic constraint 130, in such a way that each kinematic constraint 130 allows the transmission of at least one force component ***Fₙ*** orthogonal to the link to which the rotational movement is transferring.

If, for example, the bone chain 210 is a vertebral column, when it is stretched by a user the bone link 210 rotate moving from a curved configuration similar to that of Fig. 1A to a straight configuration similar to that of Fig. 1. In this case, the cable 140 is pulled and, by sliding on the pulleys 125, it causes the exoskeletal links 110 to rotate about the exoskeletal rotational joints 120. By means of the respective kinematic constraints 130, at least one force component ***Fₙ*** orthogonal to each bone link 210 is transmitted, helping the vertebral column to relax, relieving the muscular work of the user.

In particular, two cables 140 are provided, at opposite sides with respect to the exoskeletal links 110, which can be driven in an alternative way by an actuator in such a way that the exoskeletal links 110 can rotate clockwise or counter-clockwise depending on the need of the user.

In particular, the exemplary embodiment of Figs. 1 and 1A provides that each kinematic constraint 130 comprises a T-shaped element 131, pivotally connected to a corresponding bone link 210, and a double pendulum, arranged to connect the T-shaped element 131 to a corresponding exoskeletal link 110. In particular, the double pendulum comprises two parallel rods 132 pivotally connected to the T-shaped element 131 and to the corresponding exoskeletal link 110 in such a way that there is no relative rotation between of them.

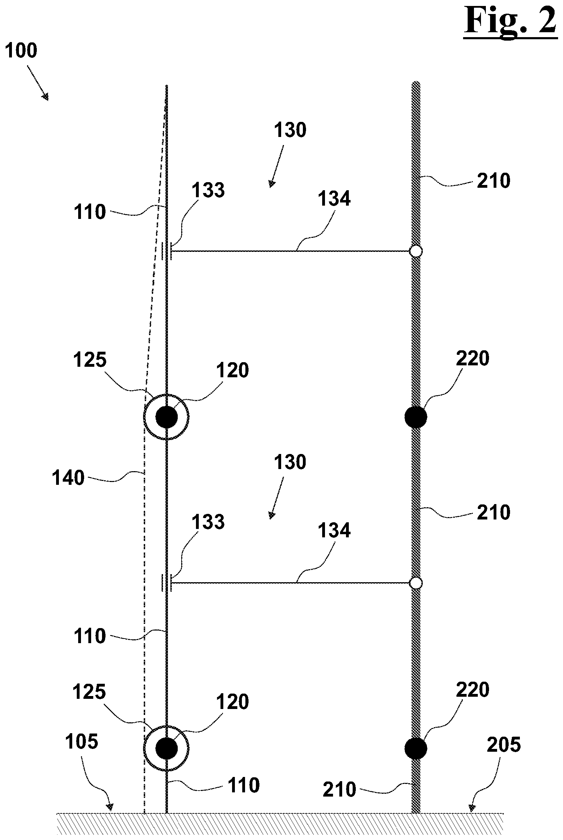

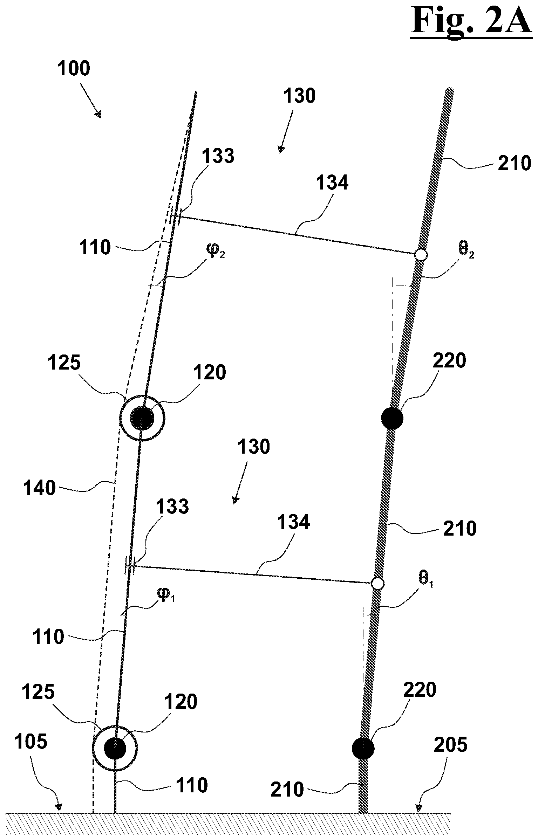

The exemplary embodiment of Figs. 2 and 2A provides instead that each kinematic constraint 130 comprises a slide 133, arranged to slide along a corresponding exoskeletal link 110, and a rod 134 arranged to connect the slide 133 to a corresponding bone link 210.

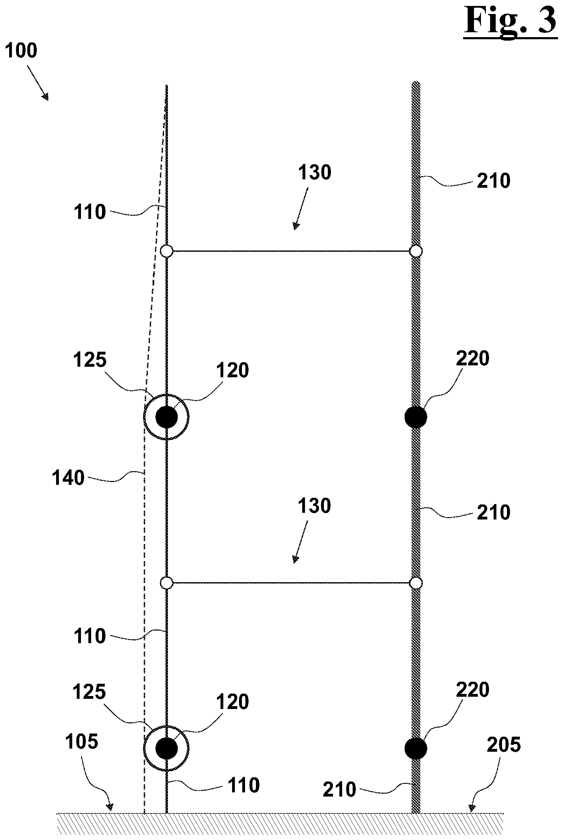

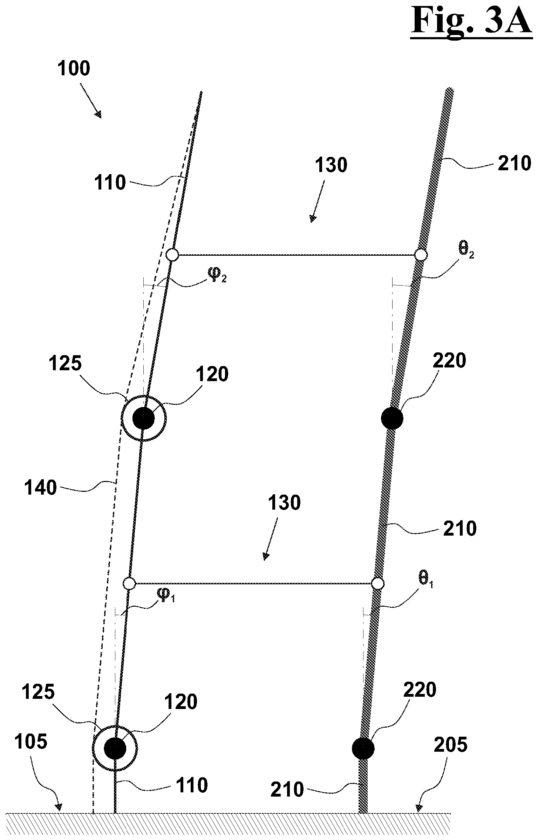

Alternatively, the exemplary embodiment of Figs. 3 and 3A provides that each kinematic constraint 130 comprises a slide 133 arranged to slide along a corresponding exoskeletal link (110), and a rod (134) arranged to connect the slide (133) to a corresponding bone link (210).

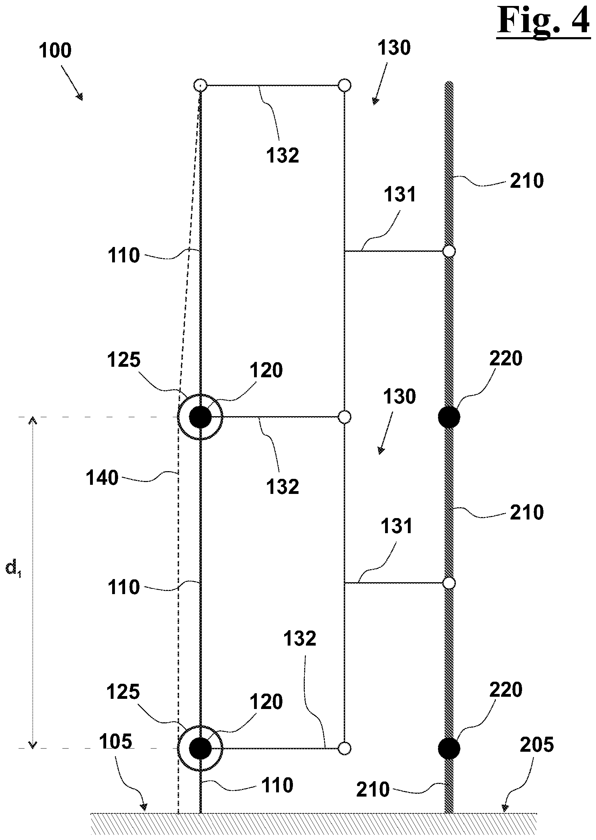

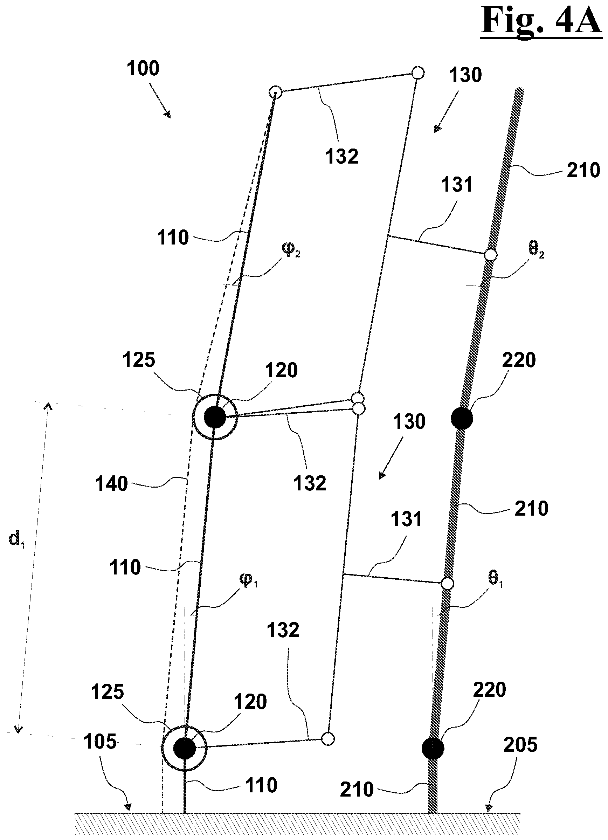

In Figs. 4 and 4A show an alternative to the exemplary embodiment of Figs. 1 and 1A, where the double pendulum 132 is connected directly to the rotational joints 120 at the end of the exoskeletal link 110.

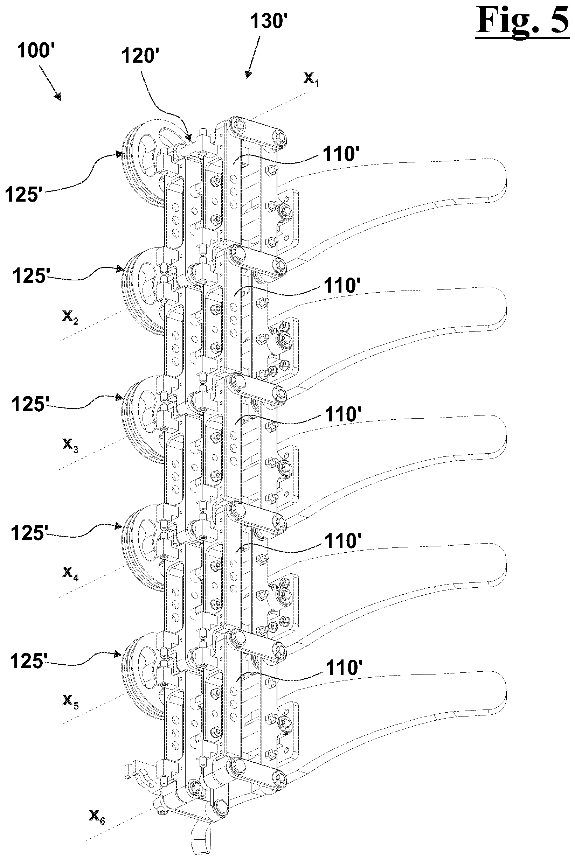

Fig. 5 shows an example of application of the kinematical chain of Figs. 4 and 4A to an exoskeleton arranged to assist the movement of the vertebral column.

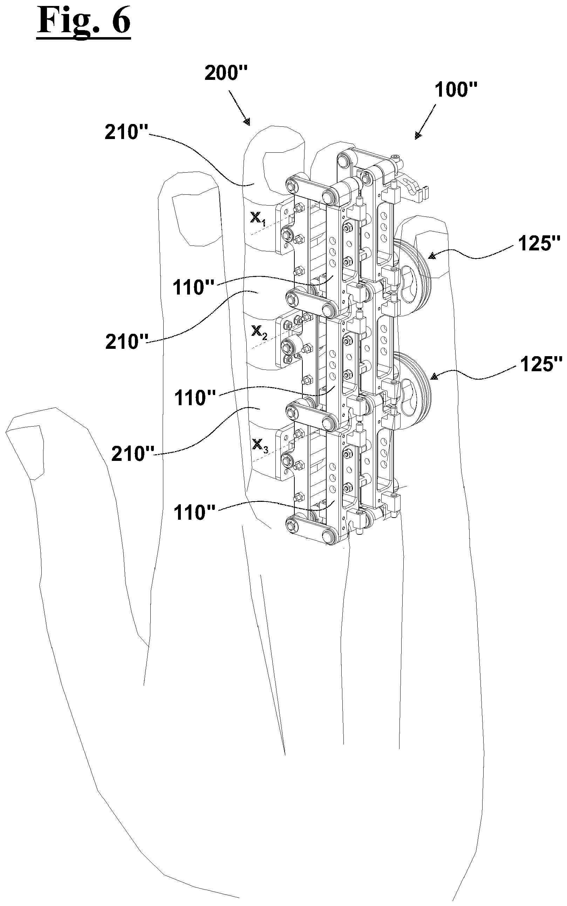

Fig. 6 shows an example of application of the kinematical chain of Figs. 4 and 4A to an exoskeleton arranged to assist the movement of the hand of a user.

The foregoing description some exemplary specific embodiments will so fully reveal the invention according to the conceptual point of view, so that others, by applying current knowledge, will be able to modify and/or adapt in various applications the specific exemplary embodiments without further research and without parting from the invention, and, accordingly, it is meant that such adaptations and modifications will have to be considered as equivalent to the specific embodiments. The means and the materials to realise the different functions described herein could have a different nature without, for this reason, departing from the field of the invention. It is to be understood that the phraseology or terminology that is employed herein is for the purpose of description and not of limitation.

## Claims

1. An exoskeletal kinematic chain (100) arranged to assist the movement of a polyarticular bone chain (200), said polyarticular bone chain (200) comprising:
- an anatomical engagement portion (205);
- a number ***i*** of bone links (210), with **3 ≤ *i* < *n*,** one of said bone links (210) being integral to said anatomical engagement portion (205);
- a number ***j*** of anatomical rotational joints (220), with ***j* = *i* - 1,** each anatomical rotational joint (220) arranged to allow a relative rotation ***θⱼ*** between two bone links (210) adjacent to it;
said exoskeletal kinematic chain (100) comprising:
- a frame (105) integrally connected to said anatomical engagement portion (205);
- a number ***i*** of exoskeletal links (110), one of said exoskeletal links (110) being integral to said frame (105);
- a number ***j*** of exoskeletal rotational joints (120), each exoskeletal rotational joint (120) arranged to allow a relative rotation ***ϕⱼ*** between two exoskeletal links (110) adjacent to it about a rotation axis ***xⱼ;***
each exoskeletal rotational joint (120) located at a distance **dⱼ** by the previous exoskeletal rotational joint (120) along said exoskeletal kinematic chain (100), each distance ***dⱼ*** being constant for each value of said relative rotations ***ϕⱼ*;**
each exoskeletal link (110) being connected to a corresponding bone link (210) by a kinematic constraint (130), each kinematic constraint (130) arranged to allow the transmission of at least one force component ***Fₙ*** orthogonal to said exoskeletal link (110) and/or to said corresponding bone link (210),
said exoskeletal kinematic chain (100) **characterized in that** at each exoskeletal rotational joint (120) is arranged a pulley (125) arranged to rotate about a corresponding rotation axis ***xⱼ,***
**and in that** at least one cable (140) is provided substantially inextensible and integrally constrained to an exoskeletal link (110) at the end of said exoskeletal kinematic chain (100) opposite to said frame (105), said or each cable (140) being in contact with each pulley (125).

2. The exoskeletal kinematic chain (100), according to claim 1, wherein said kinematic constraint (130) comprises an T-shaped element (131), pivotally connected to a corresponding bone link (210), and a double pendulum, arranged to connect said T-shaped element (131) to a corresponding exoskeletal link (110), said double pendulum comprising two parallel rods (132) pivotally connected to said T-shaped element (131) and to said corresponding exoskeletal link (110) in such a way that there is no relative rotation between of them.

3. The exoskeletal kinematic chain (100), according to claim 2, wherein said double pendulum (132) is adapted to connect said T-shaped element (131) to a corresponding exoskeletal link (110) at two exoskeletal rotational joints (120) adjacent to it.

4. The exoskeletal kinematic chain (100), according to claim 1, wherein said kinematic constraint (130) comprises a slide (133), arranged to slide along a corresponding exoskeletal link (110), and a rod (134) arranged to connect said slide (133) to a corresponding bone link (210).

5. The exoskeletal kinematic chain (100), according to claim 1, wherein said kinematic constraint (130) comprises a rod (134) pivotally constrained both to a corresponding bone link (210) and to a corresponding exoskeletal link (110).

6. The exoskeletal kinematic chain (100), according to claim 1, wherein at least one actuator is provided arranged to pull said at least one cable (140), in order to bring said exoskeletal links (110) to rotate about respective exoskeletal rotational joints (120).

7. The exoskeletal kinematic chain (100), according to claim 6, wherein are provided at least two cables (140) and said at least one actuator is adapted to pull, alternatively, said two cables (140), in order to bring said exoskeletal links (110) to rotate about respective exoskeletal rotational joints (120) clockwise or counter-clockwise.

8. A back exoskeleton (100') that uses the kinematic chain of claim 1, and that is arranged to assist the movement of the vertebral column (200') of a user, said back exoskeleton (100') comprising:
- a frame integrally connected to a portion of the pelvis of said user;
- a number ***i*** of exoskeletal links (110'), one of said exoskeletal links (110') being integral to said frame;
- a number ***j*** of exoskeletal rotational joints (120'), with ***j* = *i* - 1,** each exoskeletal rotational joint (120') arranged to allow a relative rotation ***ϕⱼ*** between two exoskeletal links (110') adjacent to it about a rotation axis ***xⱼ;***
each exoskeletal rotational joint (120') located at a distance ***dⱼ*** by the previous exoskeletal rotational joint (120') along said back exoskeleton (100'), each distance ***dⱼ*** being constant for each value of said relative rotations ***ϕⱼ*;**
each exoskeletal link (110') being connected to a corresponding vertebra (210') of said vertebral column (200') by a kinematic constraint (130'), each kinematic constraint (130') arranged to allow the transmission of at least one force component ***Fₙ*** orthogonal to said exoskeletal link (110') and/or to said corresponding vertebra (210'),
said back exoskeleton (100') **characterized in that** at each exoskeletal rotational joint (120') is arranged a pulley (125') arranged to rotate about a corresponding rotation axis ***xⱼ,***
**and in that** at least one cable (140') is provided substantially inextensible and integrally constrained to an exoskeletal link (110') at the end of said back exoskeleton (100') opposite to said frame, said or each cable (140') being in contact with each pulley (125').

9. A hand exoskeleton (100") that uses the kinematic chain of claim 1, and that is arranged to assist the movement of a finger (200'') of the hand of a user, said hand exoskeleton (100'') comprising:
- a frame integrally connected to a portion of the hand of said user;
- a number *i* of exoskeletal links (110"), one of said exoskeletal links (110") being integral to said frame;
- a number ***j*** of exoskeletal rotational joints (120"), with ***j* = *i* -1,** each exoskeletal rotational joint (120'') arranged to allow a relative rotation ***ϕⱼ*** between two exoskeletal links (110") adjacent to it about a rotation axis ***xⱼ;***
each exoskeletal rotational joint (120") located at a distance ***dⱼ*** by the previous exoskeletal rotational joint (120'') along said hand exoskeleton (100"), each distance ***dⱼ*** being constant for each value of said relative rotations ***ϕⱼ*;**
each exoskeletal link (110") being connected to a corresponding phalanx (210") of said finger (200'') by a kinematic constraint (130"), each kinematic constraint (130") arranged to allow the transmission of at least one force component ***Fₙ*** orthogonal to said exoskeletal link (110") and/or to said corresponding phalanx (210"),
said hand exoskeleton (100") **characterized in that** at each exoskeletal rotational joint (120'') is arranged a pulley (125") arranged to rotate about a corresponding rotation axis ***xⱼ,***
**and in that** at least one cable (140") is provided substantially inextensible and integrally constrained to an exoskeletal link (110") at the end of said hand exoskeleton (100") opposite to said frame, said or each cable (140") being in contact with each pulley (125").

## Patentansprüche

1. Exoskeletale kinematische Kette (100), die angeordnet ist, um die Bewegung einer polyartikulären Knochenkette (200) zu unterstützen, wobei die polyartikuläre Knochenkette (200) Folgendes umfasst:
- einen anatomischen Eingriffsabschnitt (205);
- eine Anzahl ***i*** an Knochengliedern (210), wobei ***3 ≤ i* < *n,*** wobei eines der Knochenglieder (210) einstückig mit dem anatomischen Eingriffsabschnitt (205) ist;
- eine Anzahl ***j*** an anatomischen Drehgelenken (220), wobei ***j* = *i*** - ***1*,** wobei jedes anatomische Drehgelenk (220) angeordnet ist, um eine relative Drehung ***θⱼ*** zwischen zwei Knochengliedern (210), die benachbart dazu sind, zu ermöglichen;
wobei die exoskeletale kinematische Kette (100) Folgendes umfasst:
- einen Rahmen (105), der einstückig mit dem anatomischen Eingriffsabschnitt (205) verbunden ist;
- eine Anzahl ***i*** an exoskeletalen Gliedern (110), wobei eines der exoskeletalen Glieder (110) einstückig mit dem Rahmen (105) ist;
- eine Anzahl ***j*** an exoskeletalen Drehgelenken (120), wobei jedes exoskeletale Drehgelenk (120) angeordnet ist, um eine relative Drehung ***ϕj*** zwischen zwei exoskeletalen Gliedern (110), die benachbart dazu sind, um eine Drehachse ***xⱼ*** zu ermöglichen;
wobei sich jedes exoskeletale Drehgelenk (120) in einem Abstand ***dⱼ*** zu dem vorherigen exoskeletalen Drehgelenk (120) entlang der exoskeletalen kinematischen Kette (100) befindet, wobei jeder Abstand ***dⱼ*** konstant für jeden Wert der relativen Drehungen ***ϕⱼ*** ist;
wobei jedes exoskeletale Glied (110) mit einem entsprechenden Knochenglied (210) durch eine kinematische Einschränkung (130) verbunden ist, wobei jede kinematische Einschränkung (130) angeordnet ist, um die Übertragung von zumindest einer Kraftkomponente ***Fₙ*** orthogonal zu dem exoskeletalen Glied (110) und/oder zu dem entsprechenden Knochenglied (210) zu ermöglichen,
wobei die exoskeletale kinematische Kette (100) **dadurch gekennzeichnet ist, dass** an jedem exoskeletalen Drehgelenk (120) eine Rolle (125) angeordnet ist, die angeordnet ist, um sich um eine entsprechende Drehachse xⱼ zu drehen,
**und dass** zumindest ein Kabel (140) im Wesentlichen nicht erweiterbar bereitgestellt und einstückig an einem exoskeletalen Glied (110) an dem Ende der exoskeletalen kinematischen Kette (100) gegenüber dem Rahmen (105) eingeschränkt ist, wobei das oder jedes Kabel (140) in Kontakt mit jeder Rolle (125) ist.

2. Exoskeletale kinematische Kette (100) nach Anspruch 1, wobei die kinematische Einschränkung (130) ein T-förmiges Element (131), das schwenkbar mit einem entsprechenden Knochenglied (210) verbunden ist, und ein Doppelpendel, das angeordnet ist, um das T-förmige Element (131) mit einem entsprechenden exoskeletalen Glied (110) zu verbinden, umfasst, wobei das Doppelpendel zwei parallele Stäbe (132) umfasst, die schwenkbar mit dem T-förmigen Element (131) und mit dem entsprechenden exoskeletalen Glied (110) auf eine solche Weise verbunden sind, dass es keine relative Drehung zwischen ihnen gibt.

3. Exoskeletale kinematische Kette (100) nach Anspruch 2, wobei das Doppelpendel (132) ausgelegt ist, um das T-förmige Element (131) mit einem entsprechenden exoskeletalen Glied (110) an zwei exoskeletalen Drehgelenken (120), die benachbart dazu sind, zu verbinden.

4. Exoskeletale kinematische Kette (100) nach Anspruch 1, wobei die kinematische Einschränkung (130) einen Schlitten (133), der angeordnet ist, um entlang eines entsprechenden exoskeletalen Glieds (110) zu gleiten, und einen Stab (134), der angeordnet ist, um den Schlitten (133) mit einem entsprechenden Knochenglied (210) zu verbinden, umfasst.

5. Exoskeletale kinematische Kette (100) nach Anspruch 1, wobei die kinematische Einschränkung (130) einen Stab (134) umfasst, der schwenkbar sowohl an einem entsprechenden Knochenglied (210) als auch an einem entsprechenden exoskeletalen Glied (110) eingeschränkt ist.

6. Exoskeletale kinematische Kette (100) nach Anspruch 1, wobei zumindest ein Aktor bereitgestellt ist, der angeordnet ist, um das zumindest eine Kabel (140) zu ziehen, um die exoskeletalen Glieder (110) dazu zu bringen, sich um jeweilige exoskeletale Drehgelenke (120) zu drehen.

7. Exoskeletale kinematische Kette (100) nach Anspruch 6, wobei zumindest zwei Kabel (140) bereitgestellt sind und der zumindest eine Aktor ausgelegt ist, um alternativ die zwei Kabel (140) zu ziehen, um die exoskeletalen Glieder (110) dazu zu bringen, sich um jeweilige exoskeletale Drehgelenke (120) im Uhrzeigersinn oder gegen den Uhrzeigersinn zu drehen.

8. Rücken-Exoskelett (100'), das die kinematische Kette von Anspruch 1 verwendet, und das angeordnet ist, um die Bewegung der Wirbelsäule (200') eines Benutzers zu unterstützen, wobei das Rücken-Exoskelett (100') Folgendes umfasst:
- einen Rahmen, der einstückig mit einem Abschnitt des Beckens des Benutzers verbunden ist;
- eine Anzahl ***i*** an exoskeletalen Gliedern (110'), wobei eines der exoskeletalen Glieder (110') einstückig mit dem Rahmen ist;
- eine Anzahl ***j*** an exoskeletalen Drehgelenken (120'), wobei ***j* = *i* - 1,** wobei jedes exoskeletale Drehgelenk (120') angeordnet ist, um eine relative Drehung ***ϕⱼ*** zwischen zwei exoskeletalen Gliedern (110'), die benachbart dazu sind, um eine Drehachse ***xⱼ*** zu ermöglichen;
wobei sich jedes exoskeletale Drehgelenk (120') in einem Abstand ***dⱼ*** von dem vorherigen exoskeletalen Drehgelenk (120') entlang des Rücken-Exoskeletts (100') befindet, wobei jeder Abstand ***dⱼ*** konstant für jeden Wert der relativen Drehungen ***ϕⱼ*** ist;
wobei jedes exoskeletale Glied (110') mit einem entsprechenden Wirbel (210') der Wirbelsäule (200') durch eine kinematische Einschränkung (130') verbunden ist, wobei jede kinematische Einschränkung (130') angeordnet ist, um die Übertragung von zumindest einer Kraftkomponente ***Fₙ*** orthogonal zu dem exoskeletalen Glied (110') und/oder zu dem entsprechenden Wirbel (210') zu ermöglichen,
wobei das Rücken-Exoskelett (100') **dadurch gekennzeichnet ist, dass** an jedem exoskeletalen Drehgelenk (120') eine Rolle (125') angeordnet ist, die angeordnet ist, um sich um eine entsprechende Drehachse *xⱼ* zu drehen,
**und dass** zumindest ein Kabel (140') im Wesentlichen nicht erweiterbar bereitgestellt und einstückig an einem exoskeletalen Glied (110') an dem Ende des Rücken-Exoskeletts (100') gegenüber dem Rahmen eingeschränkt ist, wobei das oder jedes Kabel (140') in Kontakt mit jeder Rolle (125') ist.

9. Hand-Exoskelett (100"), das die kinematische Kette von Anspruch 1 verwendet und das angeordnet ist, um die Bewegung eines Fingers (200") der Hand eines Benutzers zu unterstützen, wobei das Hand-Exoskelett (100") Folgendes umfasst:
- einen Rahmen, der einstückig mit einem Abschnitt der Hand des Benutzers verbunden ist;
- eine Anzahl ***i*** an exoskeletalen Gliedern (110"), wobei eines der exoskeletalen Glieder (110") einstückig mit dem Rahmen ist;
- eine Anzahl ***j*** an exoskeletalen Drehgelenken (120"), wobei ***j* = *i* - 1,** wobei jedes exoskeletale Drehgelenk (120") angeordnet ist, um eine relative Drehung *ϕⱼ* zwischen zwei exoskeletalen Gliedern (110"), die benachbart dazu sind, um eine Drehachse xⱼ zu ermöglichen;
wobei sich jedes exoskeletale Drehgelenk (120") in einem Abstand ***dⱼ*** zu dem vorherigen exoskeletalen Drehgelenk (120") entlang des Hand-Exoskeletts (100") befindet, wobei jeder Abstand ***dⱼ*** konstant für jeden Wert der relativen Drehungen ***ϕⱼ*** ist;
wobei jedes exoskeletale Glied (110") mit einem entsprechenden Fingerglied (210") des Fingers (200") durch eine kinematische Einschränkung (130") verbunden ist, wobei jede kinematische Einschränkung (130") angeordnet ist, um die Übertragung von zumindest einer Kraftkomponente ***Fₙ*** orthogonal zu dem exoskeletalen Glied (110") und/oder zu dem entsprechenden Fingerglied (210") zu ermöglichen,
wobei das Hand-Exoskelett (100") **dadurch gekennzeichnet ist, dass** an jedem exoskeletalen Drehgelenk (120") eine Rolle (125") angeordnet ist, die angeordnet ist, um sich um eine entsprechende Drehachse ***xⱼ*** zu drehen,
**und dass** zumindest ein Kabel (140") im Wesentlichen nicht erweiterbar und einstückig an einem exoskeletalen Glied (110") an dem Ende des Hand-Exoskeletts (100") gegenüber dem Rahmen eingeschränkt ist, wobei das oder jedes Kabel (140") in Kontakt mit jeder Rolle (125") ist.

## Revendications

1. Chaîne cinématique exosquelettique (100) conçue pour assister le mouvement d'une chaîne osseuse polyarticulaire (200), ladite chaîne osseuse polyarticulaire (200) comprenant :
- une partie d'engagement anatomique (205) ;
- un nombre ***i*** de maillons osseux (210), avec ***3*≤ *i* <*n,*** l'un desdits maillons osseux (210) étant solidaire à ladite partie d'engagement anatomique (205) ;
- un nombre ***j*** d'articulations de rotation anatomiques (220), avec ***j* = *i* - *1*,** chaque articulation de rotation anatomique (220) étant agencée pour permettre une rotation relative ***θⱼ*** entre deux maillons osseux (210) qui lui sont adjacents ;
ladite chaîne cinématique exosquelettique (100) comprenant :
- un cadre (105) relié de manière solidaire à ladite partie d'engagement anatomique (205) ;
- un nombre ***i*** de maillons exosquelettiques (110), l'un desdits maillons exosquelettiques (110) étant solidaire dudit cadre (105) ;
- un nombre ***j*** d'articulations de rotation exosquelettiques (120), chaque articulation de rotation exosquelettique (120) étant agencée pour permettre une rotation relative ***ϕⱼ*** entre deux maillons exosquelettiques (110) qui lui sont adjacents autour d'un axe de rotation ***xⱼ*,**
chaque articulation de rotation exosquelettique (120) étant située à une distance ***dⱼ*** de l'articulation de rotation exosquelettique précédente (120) le long de ladite chaîne cinématique exosquelettique (100), chaque distance ***dⱼ*** étant constante pour chaque valeur desdites rotations relatives ***ϕⱼ*;**
chaque maillon exosquelettique (110) étant relié à un maillon osseux (210) correspondant par une contrainte cinématique (130), chaque contrainte cinématique (130) étant agencée pour permettre la transmission d'au moins une composante de force ***Fₙ*** orthogonale audit maillon exosquelettique (110) et/ou audit maillon osseux correspondant (210),
ladite chaîne cinématique exosquelettique (100) **caractérisée en ce qu'**au niveau de chaque articulation de rotation exosquelettique (120) est agencée une poulie (125) agencée pour tourner autour d'un axe de rotation correspondant ***xⱼ,***
**et en ce qu'**au moins un câble (140) est prévu sensiblement inextensible et contraint de manière solidaire à un maillon exosquelettique (110) à l'extrémité de ladite chaîne cinématique exosquelettique (100) opposée audit cadre (105), ledit ou chaque câble (140) étant en contact avec chaque poulie (125).

2. Chaîne cinématique exosquelettique (100), selon la revendication 1, dans laquelle ladite contrainte cinématique (130) comprend un élément en forme de T (131), relié de manière pivotante à un maillon osseux correspondant (210), et un double pendule, agencé pour relier ledit élément en forme de T (131) à un maillon exosquelettique correspondant (110), ledit double pendule comprenant deux tiges parallèles (132) reliées de manière pivotante audit élément en forme de T (131) et audit maillon exosquelettique correspondant (110) de telle manière qu'il n'y ait pas de rotation relative entre eux.

3. Chaîne cinématique exosquelettique (100), selon la revendication 2, dans laquelle ledit double pendule (132) est adapté pour relier ledit élément en forme de T (131) à un maillon exosquelettique correspondant (110) au niveau de deux articulations de rotation exosquelettiques (120) qui lui sont adjacentes.

4. Chaîne cinématique exosquelettique (100), selon la revendication 1, dans laquelle ladite contrainte cinématique (130) comprend un coulisseau (133), agencé pour coulisser le long d'un maillon exosquelettique correspondant (110), et une tige (134) agencée pour relier ledit coulisseau (133) à un maillon osseux correspondant (210).

5. Chaîne cinématique exosquelettique (100), selon la revendication 1, dans laquelle ladite contrainte cinématique (130) comprend une tige (134) contrainte de manière pivotante à la fois à un maillon osseux correspondant (210) et à un maillon exosquelettique correspondant (110).

6. Chaîne cinématique exosquelettique (100), selon la revendication 1, dans laquelle au moins un actionneur est prévu, agencé pour tirer ledit au moins un câble (140), afin d'amener lesdits maillons exosquelettiques (110) à tourner autour d'articulations de rotation exosquelettiques (120) respectives.

7. Chaîne cinématique exosquelettique (100), selon la revendication 6, dans laquelle sont prévus au moins deux câbles (140) et ledit au moins un actionneur est adapté pour tirer, alternativement, lesdits deux câbles (140), afin d'amener lesdits maillons exosquelettiques (110) à tourner autour des articulations de rotation exosquelettiques (120) respectives dans le sens horaire ou anti-horaire.

8. Exosquelette dorsal (100') qui utilise la chaîne cinématique selon la revendication 1, et qui est conçu pour assister au mouvement de la colonne vertébrale (200') d'un utilisateur, ledit exosquelette dorsal (100') comprenant :
- un cadre relié de manière solidaire à une partie du bassin dudit utilisateur ;
- un nombre ***i*** de maillons exosquelettiques (110'), l'un desdits maillons exosquelettiques (110') étant solidaire dudit cadre ;
- un nombre ***j*** d'articulations de rotation exosquelettiques (120'), avec ***j* = *i* - 1,** chaque articulation de rotation exosquelettique (120') étant agencée pour permettre une rotation relative ***ϕⱼ*** entre deux maillons exosquelettiques (110') qui lui sont adjacentes autour d'un axe de rotation ***xⱼ* ;**
chaque articulation de rotation exosquelettique (120') étant située à une distance ***dⱼ*** de l'articulation de rotation exosquelettique (120') précédente le long dudit exosquelette dorsal (100'), chaque distance ***dⱼ*** étant constante pour chaque valeur desdites rotations relatives ***ϕⱼ*** ;
chaque maillon exosquelettique (110') étant relié à une vertèbre (210') correspondante de ladite colonne vertébrale (200') par une contrainte cinématique (130'), chaque contrainte cinématique (130') étant agencée pour permettre la transmission d'au moins une composante de force ***Fₙ*** orthogonale audit maillon exosquelettique (110') et/ou à ladite vertèbre correspondante (210'),
ledit exosquelette dorsal (100') **caractérisé en ce qu'**au niveau de chaque articulation de rotation exosquelettique (120') est agencée une poulie (125') agencée pour tourner autour d'un axe de rotation correspondant *xⱼ,*
**et en ce qu'**au moins un câble (140') est prévu sensiblement inextensible et contraint de manière solidaire à un maillon exosquelettique (110') à l'extrémité dudit exosquelette dorsal (100') opposée audit cadre, ledit ou chaque câble (140') étant en contact avec chaque poulie (125').

9. Exosquelette de main (100") qui utilise la chaîne cinématique selon la revendication 1, et qui est conçu pour assister au mouvement d'un doigt (200") de la main d'un utilisateur, ledit exosquelette de main (100") comprenant :
- un cadre relié de manière solidaire à une partie de la main dudit utilisateur ;
- un nombre ***i*** de maillons exosquelettiques (110"), l'un desdits maillons exosquelettiques (110") étant solidaire dudit cadre ;
- un nombre ***j*** d'articulations de rotation exosquelettiques (120"), avec ***j* = *i* - 1,** chaque articulation de rotation exosquelettique (120") étant agencée pour permettre une rotation relative ***ϕⱼ*** entre deux maillons exosquelettiques (110") qui lui sont adjacents autour d'un axe de rotation *xⱼ*
chaque articulation de rotation exosquelettique (120") étant située à une distance ***dⱼ*** de l'articulation de rotation exosquelettique précédente (120") le long dudit exosquelette de main (100"), chaque distance ***dⱼ*** étant constante pour chaque valeur desdites rotations relatives ***ϕⱼ*** ;
chaque maillon exosquelettique (110") étant relié à une phalange correspondante (210") dudit doigt (200") par une contrainte cinématique (130"), chaque contrainte cinématique (130") étant agencée pour permettre la transmission d'au moins une composante de force ***Fₙ*** orthogonale audit maillon exosquelettique (110") et/ou à ladite phalange correspondante (210"),
ledit exosquelette de main (100") **caractérisé en ce qu'**au niveau de chaque articulation de rotation exosquelettique (120") est agencée une poulie (125") agencée pour tourner autour d'un axe de rotation correspondant *xⱼ,*
**et en ce qu'**au moins un câble (140") est prévu sensiblement inextensible et contraint de manière solidaire à un maillon exosquelettique (110") à l'extrémité dudit exosquelette de main (100") opposée audit cadre, ledit ou chaque câble (140") étant en contact avec chaque poulie (125").
